# EUROPÄISCHE PATENTSCHRIFT

(11) **EP 2 825 806 B1**
(45) Veröffentlichungstag und Bekanntmachung des Hinweises auf die Patenterteilung: **27.04.2016**
(21) Anmeldenummer: 13704050.7
(22) Anmeldetag: 04.02.2013
(51) Int. Cl.: F16L 37/088, F16L 37/098

(54) **STECK-VERBINDUNGSSYSTEM, INSBESONDERE FÜR FLUIDISCHE LEITUNGEN, ARMATUREN ODER AGGREGATE**
PLUG-IN CONNECTION SYSTEM, IN PARTICULAR FOR FLUIDIC LINES, FITTINGS OR ASSEMBLIES
SYSTÈME D'ASSEMBLAGE PAR ENFICHAGE, NOTAMMENT POUR DES CONDUITES, DES ÉLÉMENTS DE ROBINETTERIE OU DES GROUPES FLUIDIQUES

(30) Priorität: 15.03.2012 DE 102012102191
(43) Veröffentlichungstag der Anmeldung: 21.01.2015
(73) Patentinhaber: Voss Automotive GmbH, 51688 Wipperfürth (DE)
(72) Erfinder: HESS, Jochem-Andreas, 51688 Wipperfürth (DE)
(74) Vertreter: Patentanwälte Dr. Solf & Zapf
(86) Internationale Anmeldenummer: PCT/EP2013/052158
(87) Internationale Veröffentlichungsnummer: WO 2013/135433

(56) Entgegenhaltungen:
- DE-A1- 3 924 173
- DE-A1- 4 334 529
- DE-U1-202004 012 795
- US-A1- 2004 041 394

## Beschreibung

Die vorliegende Erfindung betrifft ein Steck-Verbindungssystem nach dem Oberbegriff des Anspruchs 1, insbesondere für fluidische Leitungen, Armaturen oder Aggregate, umfassend ein erstes Kupplungsteil, wie ein Gehäuseteil, und ein entlang einer Achse in eine Aufnahmeöffnung des ersten Kupplungsteils einsteckbares zweites Kupplungsteil, wie ein Steckerteil, wobei an einem der beiden Kupplungsteile ein Halteelement zur Verrastung mit einem Gegen-Halteelement des anderen Kupplungsteils angeordnet ist, wobei das Halteelement eine Spreizfläche aufweist, die, indem sie relativ zu einer Gegen-Spreizfläche des Gegen-Halteelements gleitet, unter der Wirkung einer Montagekraft beim Einstecken um einen Montageweg eine Spreizbewegung des Halteelementes quer zur Achse um einen Spreizweg bewirkt.

Ein derartiges Steck-Verbindungssystem ist in spezieller Ausführung aus der WO 2006/018384 A1 bekannt. Dieses Dokument beschreibt eine Steckverbindung für Fluid-Leitungen, bestehend aus zwei zusammensteckbaren Kupplungsteilen, und zwar insbesondere einem Muffenteil und einem Steckerteil, wobei das Steckterteil mit einem Steckerschaft dichtend in eine Aufnahmeöffnung des Muffenteils einsteckbar und im eingesteckten Zustand über eine Verriegelungseinrichtung lösbar arretierbar ist, wobei die Verriegelungseinrichtung einerseits aus zwei äußeren, radialen, flanschartigen und im eingesteckten Zustand axial, in Steckrichtung benachbarten Haltestegen der beiden Kupplungsteile und andererseits aus mindestens einem Halteteil besteht, welches mit mindestens einem im Axialschnitt C-förmigem Halteabschnitt die Haltestege der beiden Kupplungsteile formschlüssig axial und radial umgreift. Das Halteelement ist zur Verrastung mit dem Gegen-Halteelement dabei an dem Halteteil ausgebildet, welches auch die Spreizfläche aufweist, während das Gegen-Halteelement mit der Gegen-Spreizfläche durch den Haltesteg des Muffenteils gebildet ist. Die Spreizfläche und die Gegen-Spreizfläche sind.jeweils konisch ausgebildet, so dass sie.beim Stecken im Wesentlichen vollflächig aufeinander gleiten.

Die WO 2006/018384 A1 beschreibt insbesondere eine technische Lösung, die es ermöglicht, unter Beibehaltung der Vorteile eines bekannten Verriegelungsprinzips die Verlustgefahr des Halteelementes zu reduzieren und die Montage zu vereinfachen, und zwar besonders auch in Anwendungsfällen, bei denen am Montageort nur ein kleiner Umgebungsraum zur Verfügung steht. Die bekannte Kupplungseinrichtung hat sich in der Praxis unter dem Namen VOSS Stecksystem 246 für die verschiedensten Anwendungsfälle bewährt. Insbesondere in einer Ausführung des Stecksystems mit der Bezeichnung VOSS 246 AX, welches vorzugsweise zur Verbindung von Kraftstoffleitungen und Aggregaten einsetzbar ist, ermöglicht es eine schnelle Montage. Die Montage des Systems erfolgt dabei durch Einstecken des Steckerteiles, an dem das Halteteil bereits vormontiert ist, in das Gehäuse- oder Muffenteil, wobei das Halteelement des Steckerteils mit dem Gegen-Halteelement des Gehäusteils verrastet. Es hat sich gezeigt, dass bei dieser Montage im Verlauf des jeweiligen Steckvorgangs zeitweise unerwünscht hohe Steckkraft-Maxima auftreten.

Ein ähuliches Verbindungs stück wird auch in der US 2004/004139411 gezeigt.

Der vorliegenden Erfindung liegt die Aufgabe zugrunde, ein Steck-Verbindungssystem der eingangs genannten Art hinsichtlich seines Montageverhaltens zu verbessern, wobei insbesondere ein System geschaffen werden soll, durch das bei Wahrung der Vorteile des bekannten Systems eine während des Steckens maximal aufzuwendende Montagekraft verringert werden kann und/oder die Steckkräfte über den Weg, den das zweite Kupplungsteil bei der Montage zurücklegt, möglichst konstant gehalten werden können.

Erfindungsgemäß wird dies bei einem gattungsgemäßen Steck-Verbindungssystem durch die Merkmale des Kennzeichens des Anspruchs 1 erreicht.

Die Erfindung beruht dabei auf der Auswertung zahlreicher Untersuchungen der Änderung der Montagekraft beim Stecken in Abhängigkeit von dem Weg, den das zweite Kupplungsteil beim Stecken zurücklegt. Durch diese Untersuchungen wurden charakteristische Verlaufskurven der Abhängigkeit der Steckkraft vom Montageweg gewonnen, welche durch die Erfindung vorteilhafterweise im Sinne des Abbaus von hohen Steckkraft-Maxima verändert werden. Dies geschieht, indem von den bekannten, ausschließlich konischen Formen der Spreizfläche und der relativ zu ihr gleitenden Gegen-Spreizfläche abgegangen wird.

Durch eine aufeinander abgestimmte geometrische Gestaltung der Spreizfläche und/oder der Gegen-Spreizfläche, durch die sich der Spreizweg beim Einstecken in Abhängigkeit vom Montageweg nichtlinear, insbesondere in verschiedenen Montagephasen beim Einstecken zumindest teilweise überproportional, proportional und/oder unterproportional ändert, kann dabei eine gleichmäßigere Verteilung der für die Montage aufzuwendenden Arbeit über den gesamten Steckvorgang erreicht werden als mit dem bekannten Steck-Verbindungssystem, was sich in einem Montagekraft-Montageweg-Diagramm in einer nahezu rechteckigen Fläche unter den Verlaufskurven der Steckkräfte ausdrückt. Insbesondere kann in einer erfindungsgemäßen, optimierten Montagekraft-Montageweg-Charakterisik die Höhe von während des Steckens auftretenden Montagekraft-Peaks verringert werden. Dabei ist es mit Vorteil zusätzlich auch möglich, den gesamten Montageweg zu verkürzen, was insbesondere unter dem Aspekt einer Minimierung des notwendigen Bauraums zu Vorteilen führt.

Dadurch, dass, insbesondere zumindest in einer der verschiedenen Montagephasen, vorzugsweise zumindest in einer Hauptmontagephase, die Kontur der Spreizfläche derart auf die Gegen-Kontur abgestimmt werden kann, dass die Kontur der Spreizfläche und die Gegen-Kontur nicht vollflächig, sondern nur in linienförmigem Kontakt, zumindest aber in einem gegenüber der Gesamtgröße der Fläche äußerst schmalem Band, aneinander anliegen, können mit Vorteil beim Stecken auftretende Reibungskräfte auf ein Minimum reduziert werden.

Des Weiteren kann durch die Erfindung der komplexen Kausalität Rechnung getragen werden, die bei der Verursachung der Montagekräfte zu beachten ist. So wird bei einem fluidführenden Steck-Verbindungssystem, bei dem das zweite Krupplungsteil, ein Steckerteil ist, das entlang der Achse mit einem Schaft dichtend in die Aufnahmeöffnung des ersten Kupplungsteils einsteckbar ist, und bei dem zum Dichten umfangsgemäß in einem der beiden Kupplungsteile mindestens eine Nut ausgebildet ist, in der eine, insbesondere aus einem Elastomer bestehende, Umfangsdichtung angeordnet ist, die Montagekraft u. a. auch durch die zu einem bestimmten Zeitpunkt während der Montage beginnende und danach fortbestehende Wechselwirkung der Umfangsdichtung mit beiden Kupplungsteilen bestimmt. Dies oder auch das Stecken gegen einen sogenannten Auslaufstopp, also beispielsweise gegen die Federkraft eines im Fluidstrom nachgeordneten Ventils, führt in der Regel in dem bekannten Steck-Verbindungssystem zu einem überproportionalen Steckkraftanstieg. Im Rahmen der erfindungsgemäßen Abstimmung der Kontur der Spreizfläche auf die ihr zugewandte Gegen-Kontur der Gegen-Spreizfläche können durch entsprechende, antagonistisch wirkende, nichtlineare Änderungen des Spreizwegs in Abhängigkeit vom Montageweg solche Einflüsse zusätzlicher, der Steckkraft entgegenwirkender Kräfte mit Vorteil kompensiert werden.

Dazu kann bzw. können die Kontur der Spreizfläche und/oder die Gegen-Kontur, . auch aus mehreren Abschnitten bestehen, die jeweils unterschiedlich ausgebildet sind. Hierbei ist es möglich, jeweils abschnittsweise oder über die gesamte Fläche ausgeführte, konusförmige, konkav und/oder konvex gewölbte Konturen miteinander zu kombinieren: z. B. bevorzugt konusförmig in der Spreizfläche gegen konvex in der Gegen-Spreizfläche oder umgekehrt, konvex in der Spreizfläche gegen konvex in der Gegen-Spreizfläche, konvex in der Spreizfläche gegen konkav in der Gegen-Spreizfläche oder umgekehrt oder ein konusförmiger Abschnitt zusammen mit einem konvexen Abschnitt in der Spreizfläche gegen einen konusförmigen Abschnitt in der Gegen-Spreizfläche usw. Die Übergänge zwischen den Abschnitten können dabei insbesondere stetig gestaltet werden, so dass keine sprunghaften Änderungen der wirkenden Kräfte hervorgerufen werden.

Weitere vorteilhafte Ausgestaltungsmerkmale der Erfindung sind in den Unteransprüchen sowie in der folgenden Beschreibung enthalten. Anhand von mehrerer bevorzugter Ausführungsbeispiels soll im Folgenden die Erfindung näher erläutert werden.

Dabei zeigen:
- Fig. 1: in perspektivischer Explosionsdarstellung seiner Hauptbestandteile eine bevorzugte exemplarische Ausführung eines erfindungsgemäßen Steck-Verbindungssystems,
- Fig. 2: im Axialschnitt, eine weitere bevorzugte exemplarische Ausführung eines erfindungsgemäßen Steck-Verbindungssystems im vormontierten Zustand,
- Fig. 3a und 3b: ebenfalls axial geschnitten, eine dritte bevorzugte exemplarische Ausführung eines erfindungsgemäßen Steck-Verbindungssystems, einerseits während der Montage und andererseits im fertig montierten Zustand,
- Fig. 4: eine prinzipielle diagrammatische Darstellung der Abhängigkeit des Spreizweges vom Montageweg für drei erfindungsgemäße Steck-Verbindungssysteme im Vergleich mit zwei nicht erfindungsgemäßen Steck-Verbindungssystemen,
- Fig. 5: eine vergleichende diagrammatische Darstellung der Abhängigkeit der Montagekraft vom Montageweg für zwei erfindungsgemäße Steck-Verbindungssysteme und ein nicht erfindungsgemäßes Steck-Verbindungssystem,
- Fig. 6: eine stark vergrößerte Längsschnitt-Darstellung der Spreizfläche und der Gegen-Spreizfläche in einem nicht erfindungsgemäßen Steck-Verbindungssystem, in einer Detaildarstellung gemäß der Einzelheit, die in Fig. 3a mit VII bezeichnet ist.
- Fig. 7 bis 10: in Darstellungen wie in Fig. 6, die Spreizfläche und die Gegen-Spreizfläche in verschiedenen Ausführungen eines erfindungsgemäßen Steck-Verbindungssystems,
- Fig. 11 und 12: Querschnitts-Darstellungen zweier bevorzugter Ausführungen eines Halteteils eines erfindungsgemäßen Steck-Verbindungssystems, beide in einer Ansicht entsprechend einer Schnittlinie XI-XI in Fig. 2.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

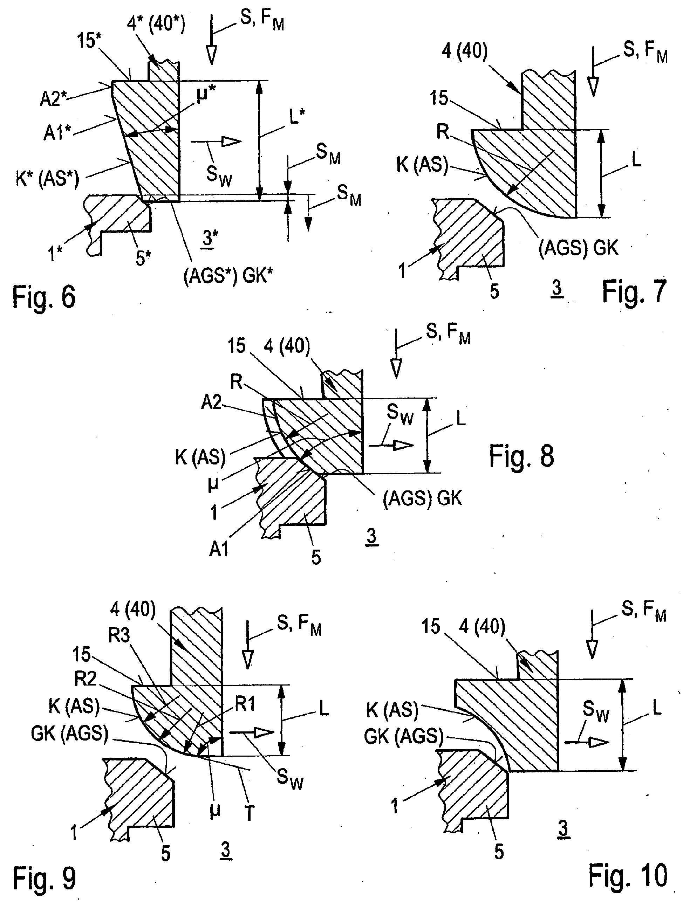

In den verschiedenen Figuren der Zeichnung sind gleiche und einander entsprechende Teile stets mit den gleichen Bezugszeichen versehen und werden daher im Folgenden in der Regel jeweils nur einmal beschrieben. Die Bezugszeichen der konstruktiven Teile der nicht erfindungsgemäßen Ausführung in Fig. 6 sind zusätzlich mit einem Stern (*) gekennzeichnet.

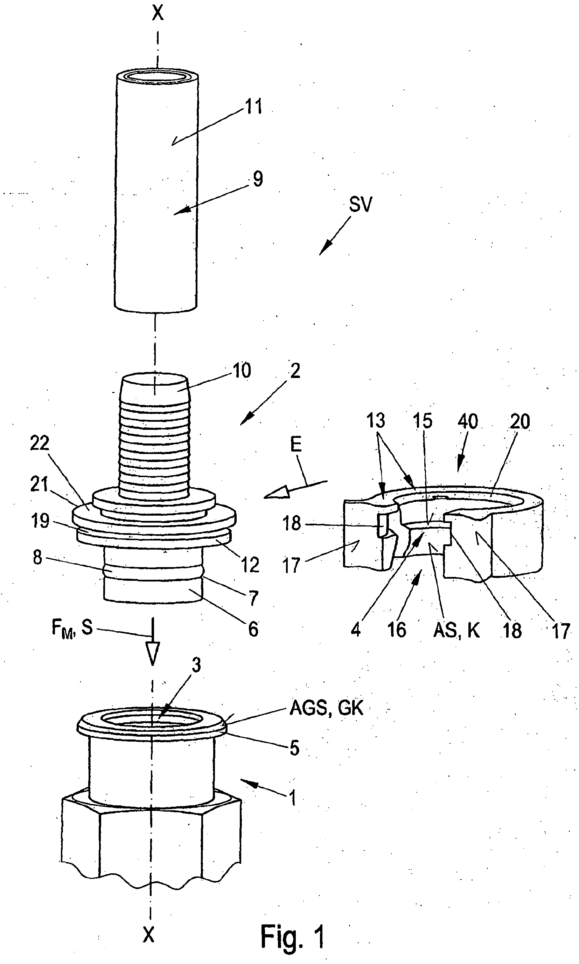

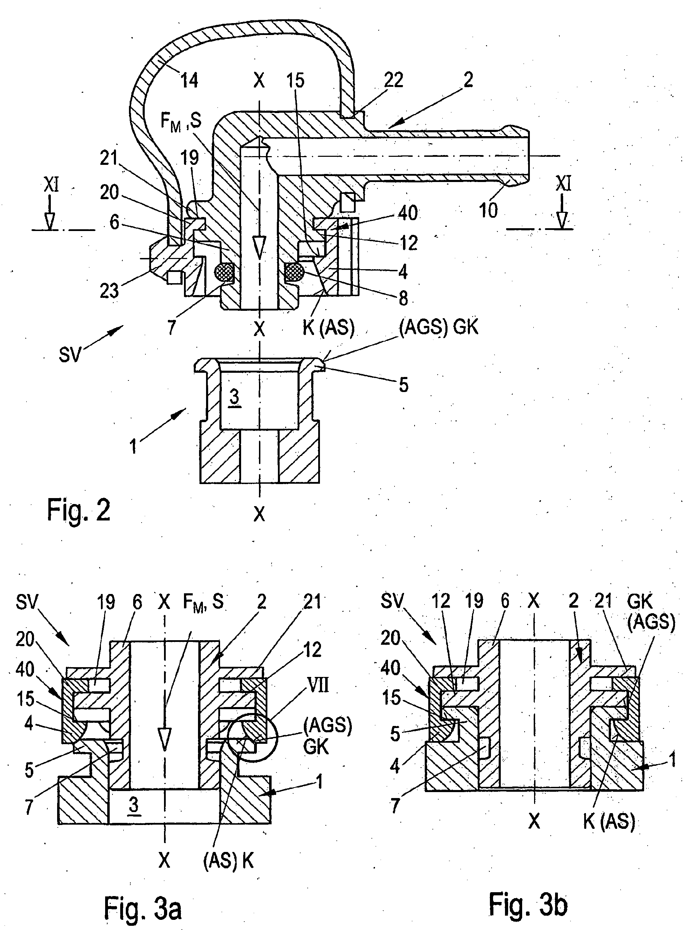

Wie sich zunächst aus Fig. 1 und 2, aber auch Fig. 3a und 3b, ergibt, umfasst ein erfindungsgemäßes Steck-Verbindungssystem SV, das insbesondere bei fluidführenden Leitungen, Armaturen oder Aggregaten zur Anwendung kommen kann, ein erstes Kupplungsteil 1, wie ein Gehäuseteil oder ein Adapterteil für ein fluidisches Aggregat, und ein entlang einer Achse X-X in eine Aufnahmeöffnung 3 des ersten Kupplungsteils 1 einsteckbares zweites Kupplungsteil 2, wie ein Steckerteil. Die Einsteckrichtung des zweiten Kupplungsteils 2 in das erste Kupplungsteil 1 ist dabei durch einen in den Figuren jeweils mit dem Bezugszeichen S bezeichneten Pfeil gekennzeichnet.

Bei der Ausführung in Fig. 1 handelt es sich um ein geradliniges, in Fig. 2 um ein gewinkeltes und in Fig 3a und 3b ebenfalls um ein geradliniges erfindungsgemäßes Steck-Verbindungssystem SV, wobei sich die Systeme in Fig. 1 und Fig. 3a/3b durch die Art unterscheiden, wie daran ein Leitungsanschluss erfolgt ist bzw. erfolgen kann. Fig. 3a/3b stellen Ausschnitte eines erfindungsgemäßen Steck-Verbindungssystems SV ohne die Leitungsanschlüsse dar, die je nach dem konkreten Anwendungsfall eine gewünschte Spezifizierung erfahren können.

An einem der beiden Kupplungsteile 2 ist ein Halteelement 4 zur Verrastung mit einem Gegen-Halteelement 5 des anderen Kupplungsteils 1 angeordnet, wobei das Gegen-Halteelement,5 insbesondere durch einen flanschartigen Haltesteg des als Muffenteil ausgebildeten ersten Kupplungsteils 1 gebildet ist. Das Halteelement 4 könnte einstückig mit dem jeweiligen Kupplungsteil 2 ausgeführt sein; oder es handelt sich in spezieller Ausführung - wie dargestellt - bevorzugt um ein Halteelement 4 an einem separaten Halteteil 40.

Das Halteelement 4 weist eine Länge L und eine Spreizfläche AS auf, die, indem sie relativ zu einer Gegen-Spreizfläche AGS des Gegen-Halteelements 5 am anderen Kupplungsteil 1 gleitet, unter der Wirkung einer in Steckrichtung S wirkenden Montagekraft F_{M} beim Einstecken des Kupplungsteils 2 um einen Montageweg s_{M} entlang der Achse X-X, eine Spreizbewegung des Halteelementes 4 quer zur Achse X-X um einen Spreizweg s_{W} bewirkt. Die Spreizfläche AS ist eine an einem dem ersten Kupplungsteil 1 zugewandten Rand des Halteelements 4 umfangsgemäß verlaufende innere Schrägfläche. Die Gegen-Spreizfläche AGS ist eine an einem dem zweiten Kupplungsteil zugewandten Rand des Gegen-Halteelements 5 umfangsgemäß verlaufende äußere Schrägfläche.

Erfindungsgemäß ist vorgesehen, dass eine der Gegen-Spreizfläche AGS zugewandte Kontur K der Spreizfläche AS derart auf eine der Spreizfläche AS zugewandte Gegen-Kontur GK der Gegen-Spreizfläche AGS abgestimmt ist, dass sich der Spreizweg s_{W} beim Einstecken in Abhängigkeit vom Montageweg s_{M} nichtlinear ändert. In den zeichnerischen Schnitt-Darstellungen von Fig. 2, 3a, 3b sowie 6 bis 10 sind dabei nur die Kontur K bzw. die Gegenkontur GK der Flächen AS, AGS zu erkennen. Deswegen sind dort die entsprechenden Bezugszeichen der Flächen AS, AGS - im Gegensatz zu Fig. 1 - jeweils in Klammern gesetzt.

Bei dem zweiten Kupplungsteil 2 handelt es sich insbesondere um ein Steckerteil, das entlang der Achse X-X mit einem Steckerschaft 6 dichtend in die Aufnahmeöffnung 3 des ersten Kupplungsteils 1 einsteckbar ist, wobei zum Dichten umfangsgemäß in einem der beiden Kupplungsteile 1, 2 - in den in Fig. 1, 2, 3a und 3b dargestellten Ausführungsformen jeweils im Steckerteil 2 - mindestens eine Nut 7 ausgebildet ist, in der eine insbesondere aus einem Elastomer bestehende Umfangsdichtung 8 angeordnet ist (Fig. 1, 2) bzw. angeordnet werden kann (Fig. 3a, 3b).

Fig. 1 zeigt auch ein Anschlussende einer Fluidleitung 9, die mittels des erfindungsgemäßen Steck-Verbindungssystems SV an eine Armatur oder ein Aggregat angeschlossen werden kann. Die Fluidleitung 9 kann zur Montage, wie jeweils für die erste und die zweite Ausführung in Fig. 1 und 2 dargestellt, beispielsweise auf das Steckerteil 2 aufgedornt, d. h. auf einen Dorn 10 des Steckers kraft- und formschlüssig aufgeschoben werden, wobei sie dazu eine insbesondere flexible Wandung 11 aufweisen kann. Bei dem erfindungsgemäßen Steck-Verbindungssystem SV in der dritten Ausführung könnte stattdessen beispielsweise eine Verschweißung mit einer starren Leitung 9 erfolgen.

Das Steckerteil 2 des erfindungsgemäßen Steck-Verbindungssystems SV kann im eingesteckten Zustand über eine in ihrer Gesamtheit nicht näher bezeichnete Verriegelungseinrichtung am Muffenteil 1 lösbar arretiert werden. Die Verriegelungseinrichtung besteht einerseits aus zwei äußeren, radialen, flanschartigen Haltestegen 5, 12 der beiden zur Herstellung der Steckverbindung dienenden Kupplungsteile 1, 2, von denen der eine Haltesteg das Gegen-Halteelement 5 ist und von denen der andere Haltesteg 12 sich am Steckerschaft 6 befindet, und andererseits aus dem Halteteil 40, welches das Halteelement 4 aufweist und an dem zweiten Kupplungsteil 2 vormontiert werden kann. Die Haltestege 5, 12 liegen im eingesteckten, montierten Zustand, wie er z. B. in Fig. 3b gezeigt ist, axial, in Steckrichtung S einander benachbart. Das Halteteil 40 umgreift mit mindestens einem im Axialschnitt C-förmigen Halteabschnitt 13 die Haltestege 5, 12 axial und radial formschlüssig.

Dabei kann das Halteteil 40 an einem der beiden Kupplungsteile 1, 2, und zwar - wie Fig. 2 zeigt - bei der dargestellten bevorzugten Ausführungsform an dem Steckerteil 2 unverlierbar vormontiert sein. Hierzu kann eine Verliersicherung 14 vorgesehen sein. Das Halteteil 40 und die Verliersicherung 14 können aus einem technischen kunststoff bzw. aus einem Elastomer, vorzugsweise einem thermoplastischen Elastomer, bestehen.

Das Halteteil 40 und das erste Kupplungsteil 1 sind in aneinander angepasster Weise derart ausgebildet, dass das Halteteil 40 radial auf das Steckerteil 2 aufgerastet werden kann, wobei das Halteteil 40 im Bereich jedes Halteabschnittes 13 radial elastisch beweglich ist. Außerdem sind in für die Erfindung charakteristischer Weise das Halteteil 40 im Bereich jedes Halteabschnittes 13 sowie der Haltesteg 5 des Muffenteils 1, in Anpassung aneinander zur Bildung einer in Steckrichtung S wirkenden, formschlüssigen Rastverbindung derart ausgebildet, dass ,beim Zusammenstecken jeder Halteabschnitt 13 durch den sich dazu relativ bewegenden Haltesteg 5 radial nach außen bewegt - also um den Spreizweg s_{W} gepreizt - wird und nachfolgend im eingesteckten Zustand durch radiale Zurückbewegung nach innen die Haltestege 5, 12 der beiden unmittelbar miteinander zu verbindenden Teile 1, 2 zur Verriegelung umgreift.

Zur Verrastung weist das Halteteil 40 im Bereich jedes Halteabschnittes 13 auf der beim Steckvorgang dem ersten Kupplungsteil 1 zugewandten Seite ein Rastelement auf, das durch das bereits beschriebene, in erfindungsgemäßer Weise ausgebildete Halteelement 4 gebildet ist. An dem Halteelement 4 ist auf seiner in Steckrichtung S vorderen, dem Kupplungsteil 1 zugewandten Seite eine radial innere Schrägfläche - die Spreizfläche AS - sowie auf seiner gegenüberliegenden Seite eine radiale Haltekante 15. ausgebildet. Durch den sich beim Stecken relativ bewegenden Haltesteig 5 wird über seine Schrägfläche - die Gegenspreizfläche AGS - die radial nach außen gerichtete Spreizbewegung des Halteelementes 4 bewirkt, bis dieses abschließend zurückfedert und mit der radialen Haltekante 15 den Haltesteg - also das Gegen-Halteelement 5 - rastend formschlüssig hintergreift.

Bevorzugt kann das Halteteil 40 als einteilige elastische Ringklammer bzw. Halteclip ausgebildet sein, die zur radial elastischen Verformbarkeit an einer Umfangsstelle eine axial und radial durchgehende Schlitzunterbrechung 16 aufweist, wie diese in Fig. 1, 11 und 12 gezeigt ist. Dabei können im Bereich von über die Schlitzunterbrechung 16 der Ringklammer getrennten, einander in Umfangsrichtung gegenüberliegenden Klammerenden 17 fensterartige Durchführöffnungen 18 für die Haltestege 5, 12 gebildet sein. Dies erleichtert eine Vormontage und Demontage des Halteteiles 40.

Für eine Vormontage-Fixierung des Halteteiles 40 am Steckerteil 2, wie diese in Fig. 2 und 3a gezeigt ist, weist das Steckerteil 2 eine radiale Ringnut 19 zur Aufnahme eines korrespondierenden radialen Ringbundes 20 des Halteabschnitts 13 des Halteteiles 40 auf. Der Ringbund 20 ist durch eine quer zur Steckrichtung S gerichtete radiale Einführbewegung der Ringklammer mit der Schlitzunterbrechung 16 voran unter elastischer Aufweitung der Ringklammer in die Ringnut 19 einführbar (Pfeil E), wobei die Nut 19 vorzugsweise axial zwischen dem Haltesteg 12 und einem zusätzlichen Fixierringsteg 21 gebildet sein kann, dessen Durchmesser größer als der Durchmesser des Haltesteges 12 ist.

Zur Demontage kann das Halteteil 40 unter Aufhebung der Verrastung mit dem Muffenteil 1 seitlich entgegen der Richtung des Pfeils E in Fig. 1 abgezogen und das Steckerteil 2 aus dem Muffenteil 1 herausgezogen werden. Die Verliersicherung 14 gewährleistet dabei, dass das Halteteil 40 nicht verloren geht. Insbesondere ist die Verliersicherung 14 dabei - wie-dargestellt - als eine aus einem gummielastischen Material bestehende Haltelasche ausgebildet, die einerseits in einer umfangsgemäßen Haltenut 22 auf dem Steckerteil 1 sitzt und die andererseits auf einen vom Umfang des Halteteiles 40 außen abstehenden pilzförmigen Dorn 23 aufgeclipst ist, wie dies in Fig. 2 zu sehen ist.

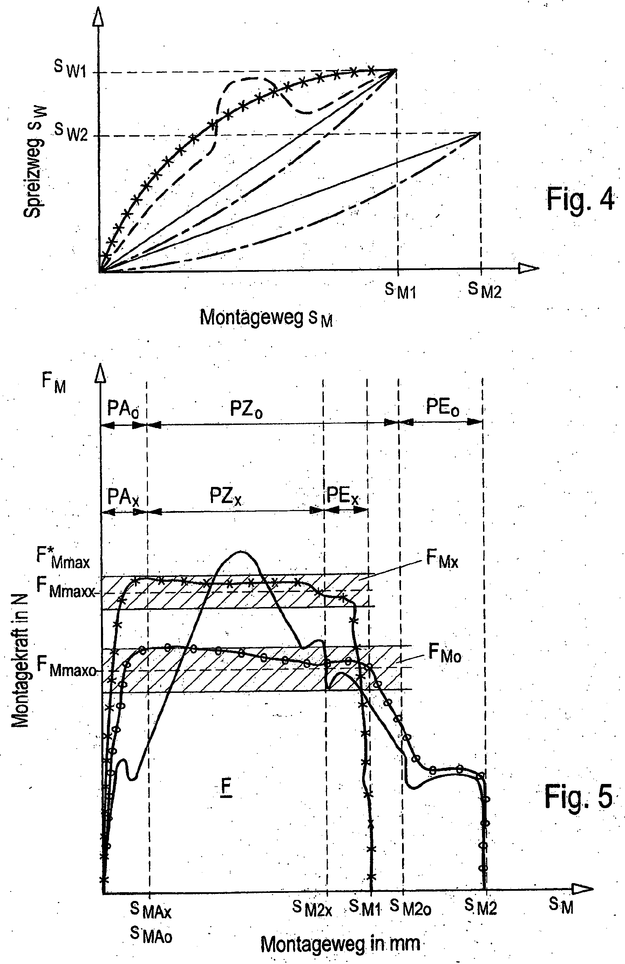

In Fig. 4 ist die Abhängigkeit des Spreizweges s_{W} vom Montageweg s_{M} für vier erfindungsgemäße Steck-Verbindungssysteme SV (Kennzeichnung durch die gestrichelt, strichpunktiert und durch die Linie x-x-x idealisiert dargestellten Kurvenzüge) und für zwei nicht erfindungsgemäße Steck-Verbindungssystem (Kennzeichnung durch einfache Volllinien) vergleichend dargestellt. Die Linie x-x-x kennzeichnet dabei eine überproportionale Abhängigkeit, die strichpunktierten Linien unterproportionale Abhängigkeiten und die gestrichelte Linie eine nichtlineare Abhängigkeit, die durch ein stetig differenzierbares Polynom höherer Ordnung, eine sogenannte Spline-Funktion beschrieben werden kann. Es sind zwei Montageweglängen s_{M1}, s_{M2} dargestellt. Für die längere, zweite Montageweglänge s_{M2} ist der Kurvenverlauf für eine nicht erfindungsgemäße und eine erfindungsgemäße technische Lösung, für die kürzere, erste Montageweglänge s_{M1} sind die Kurvenverläufe für eine nicht erfindungsgemäße und drei erfindungsgemäße technische Lösungen dargestellt. In allen Fällen entspricht dem kürzeren ersten Montageweg s_{M1} ein längerer erster Spreizweg s_{W1} und dem längeren zweiten Montageweg s_{M2} ein kürzerer zweiter Spreizweg s_{W2}.

In Fig. 5 ist die Abhängigkeit der Montagekraft F_{M} vom Montageweg s_{M} für zwei erfindungsgemäße Steck-Verbindungssysteme SV (Kennzeichnung durch die idealisiert dargestellten Kurvenzüge o-o-o und x-x-x) und für ein nicht erfindungsgemäßes Steck-Verbindungssystem (Kennzeichnung durch einen idealisierten, durch Mittelwertbildung gewonnenen Kurvenzug als einfache Volllinie) vergleichend dargestellt.

Die Charakteristik des Letzteren wurde dabei durch zahlreiche Messungen gewonnen, wobei das Verbindungssystem ein Haltelement 4 und ein Gegen-Halteelement 5 mit jeweils einer Kontur K der Spreizfläche AS und einer Gegen-Kontur GK der Gegen-Spreizfläche AGS aufwies, wie sie in Fig. 6 dargestellt sind. Der Gesamt-Montageweg für dieses System ist wie in Fig. 4 mit dem Bezugszeichen s_{M2} bezeichnet.

Die Charakteristik des erfindungsgemäßen Steck-Verbindungssysteme SV mit der Kennzeichnung durch den Kurvenzug x-x-x wurde mit einem Halteelement 4 und einem Gegen-Halteelement 5 mit jeweils einer Kontur K der Spreizfläche AS und einer Gegen-Kontur GK der Gegen-Spreizfläche AGS gewonnen, wie sie in Fig. 8 dargestellt sind. Der Kurvenzug x-x-x zeigt exemplarisch sowohl einen verkürzten Steckweg s_{M1}, als auch eine gegenüber der maximalen Steckkraft F*_{Mmax} der nicht erfindungsgemäßen Ausführung reduzierte maximale Steckkraft F_{Mmaxx}, wobei erfindungsgemäß aber auch die Minimierung nur einer der beiden Größen Montageweg s_{M} oder maximale Steckkraft F_{Mmax} möglich ist. Die Charakteristik des erfindungsgemäßen Steck-Verbindungssystems SV mit der Kennzeichnung durch den Kurvenzug o-o-o wurde mit einer nicht dargestellten Ausführung gewonnen, die sich von der Ausführung in Fig. 8 dadurch unterschied, dass das Halteelement 5 die gleiche Länge L hatte wie das nicht erfindungsgemäße in Fig. 6. Dementsprechend ist auch der Montageweg s_{M2} länger.

Bei der nicht erfindungsgemäßen Ausführung ist die Kraft-Montageweg-Charakteristik F_{M}-s_{M} durch einen im Vergleich mit der erfindungsgemäßen Ausführung geringeren, in erster Näherung linearen Anstieg der Montagekraft F_{M} über dem Montageweg s_{M} gekennzeichnet. Sie erreicht während des Einsteckens. dann ein Maximum F*_{Mmax} (in Fig. 5 exemplarisch bei etwa 5 mm) und fällt danach in zwei Stufen auf den Wert 0, welcher das Einrasten charakterisiert, ab. Ein weiteres Einstecken ist aufgrund der Anlage der Haltestege 5, 12 der beiden Kupplungsteile 1, 2 aneinander nicht möglich, was durch einen plötzlichen, extremal ansteigenden Steckkraftanstieg am Ende der Kurve veranschaulicht wird.

Die erfindungsgemäßen Kraft-Weg-Charakteristiken F_{M}-s_{M} sind vergleichsweise anders ausgebildet. Es lassen sich hier beim Einstecken drei Montagephasen unterscheiden: eine Anfangsmontagephase PAₒ, PAₓ mit jeweils gleichem Steckweg s_{MA0}, s_{MAx}, eine Hauptmontagephase PZₒ, PZₓ mit unterschiedlich großen Steckwegen s_{MZo}, s_{MZx}, und eine Endmontagephase PE₀, PEₓ mit unterschiedlich großen Steckwegen s_{M2}, s_{M1}. Dabei ist der beim Einstecken in der Hauptmontagephase PZₒ, PZₓ zurückgelegte Montageweg s_{M} des zweiten Kupplungsteils 2 mehrfach größer ist als der jeweils in der Anfangsmontagephase PAₒ, PAₓ zurückgelegte Montageweg s_{M} und der in der Endmontagephase PEₒ, PEₓ zurückgelegte Montageweg s_{M} des zweiten Kupplungsteils 2. Bei der nicht erfindungsgemäßen Ausführung ist keine derartige Unterscheidung in Steckphasen möglich.

Die Darstellung lässt erkennen, dass im Rahmen beider Ausführungen der Erfindung die Kontur K der Spreizfläche AS derart auf die Gegen-Kontur GK abgestimmt ist, dass in der jeweiligen Anfangsmontagephase PAₒ, PAₓ zu Beginn des Einsteckens mit einer Änderung Δs_{M} des Montageweges s_{M} eine sehr starke Änderung Δs_{W} des Spreizweges s_{W} erfolgt. Es kommt im Vergleich mit der nicht erfindungsgemäßen Ausführung zu einem sehr viel steileren, d. h. zu einem um ein Mehrfaches höheren, Anstieg der Montagekraft F_{M} über dem Montageweg s_{M}. Insbesondere wird dabei schon in der Anfangsmontagephase eine maximale Steckkraft F_{Mmax} erreicht, die beim weiteren Stecken nicht mehr überschritten wird.

Ein solcher steiler Anstieg kann zum Einen dann erreicht werden, wenn die Kontur K der Spreizfläche AS und/oder die Gegen-Kontur GK, zumindest abschnittsweise; eine Ausbildung in Form einer Kalotte, insbesondere der einer Kugel, eines Ellipsoids oder eines Rotationsparaboloids, mit im Querschnitt konvexer Begrenzung ihrer Mantelfäche aufweist, wie dies exemplarisch in Fig. 7 und 9 dargestellt ist. Der Anstieg ist dann nichtlinear, weil durch eine Änderung Δs_{M} des Montageweges s_{M} eine überproportionale Änderung Δs_{W} des Spreizweges s_{W} bewirkt wird. Die Geometrie der jeweiligen Begrenzungskurve des Konturenquerschnitts kann dabei - auch jeweils abschnittsweise - durch Radien, Geraden und/oder durch mehrfach stetig differenzierbare.Funktionskurven von Polynomen höherer Ordnung approximierbar sein, die in der Mathematik als Splines, insbesondere als sogenannte B-Splines, bezeichnet werden.

Ein steiler Anstieg in der Anfangsmontagephase PAₒ, PAₓ kann zum Anderen aber auch dann erreicht werden, wenn die Kontur K der Spreizfläche AS und/oder die Gegen-Kontur GK, im Abschnitt A1 an der Spitze des Halteelementes 4 eine konusförmige Ausbildung mit im Querschnitt geradliniger Begrenzung ihrer Mantelfäche aufweist, wie dies exemplarisch in Fig. 8 dargestellt ist. Der Anstieg ist dann linear. Phasenweise lineare Änderungen der Montagekraft F_{M} und des Spreizwegs s_{W} in Abhängigkeit vom Montagewg s_{M} sind somit erfindungsgemäß nicht ausgeschlossen, solange sich der Spreizweg s_{W} beim Einstecken in Abhängigkeit vom Montageweg s_{M} - zumindest über seine gesamte Länge hinweg gesehen - nichtlinear ändert.

Damit der Anstieg erfindungsgemäß größer als bei einer nicht erfindungsgemäßen Ausführung ist, sollte ein Winkel µ, den die Kontur K oder eine Tangente T an die Kontur K (Fig. 9) mit der Achse X-X in einem konischen bzw. konvex gekrümmten Abschnitt an der Spitze des Halteelementes 4 einschließt, größer als 45°, aber kleiner als 90° sein. Je größer der Winkel µ ist, desto steiler ist der Anstieg. Im Vergleich dazu liegt in der nicht erfindungsgemäßen Ausführung gemäß Fig. 6 der entsprechende Winkel µ, den die Kontur K mit der Achse X-X einschließt, im Bereich zwischen 0° und maximal 35°.

Aufgrund des steilen Anstiegs wird die Hauptmontagephase PZₒ, PZₓ bereits erreicht, nachdem durch das zweite Kupplungsteil 2 nur weniger als 15 Prozent, vorzugsweise weniger als 10 Prozent, besonders bevorzugt weniger als 5 Prozent, des gesamten Montageweges s_{M} zurückgelegt sind.

Im Hinblick auf die Hauptmontagephase PZₒ, PZₓ zeigt Fig. 5 durch die schraffierten bandförmigen Bereiche, dass die Kontur K der Spreizfläche AS in bevorzugter Weise erfindungsgemäß derart auf die Gegen-Kontur GK abgestimmt ist, dass die Montagekraft F_{M} in der Hauptmontagephase PZₒ, PZₓ um nicht mehr als 20 Prozent, vorzugsweise um nicht mehr als 15 Prozent, besonders bevorzugt um nicht mehr als 10 Prozent, von einem mittleren Wert der Montagekraft F_{M} in der Hauptmontagephase PZₒ, PZₓ abweicht. Dies gilt für beide beispielhaft dargestellten Ausführungen, wobei die Schwankungsbreite der Montagekraft F_{M} für die Ausführung mit dem Halteelement 4 größerer Länge L (o-o-o) größer ist als für die Ausführung mit dem Halteelement 4 kürzerer, Länge L (x-x-x), wobei bei der Ersteren jedoch die maximal erforderliche Steckkraft F_{M} sehr viel niedriger liegt.

Für beide erfindungsgemäßen Ausführungen - selbst für die Ausführung mit dem Halteelement 4 kürzerer Länge L (x-x-x) - ist zu konstatieren, dass die maximal erforderliche Steckkraft F_{Mmaxo}, F_{Mmaxx}, um mindestens etwa 10 Prozent, bei der unmittelbar vergleichbaren Ausführung mit dem Halteelement 4 größerer Länge L (o-o-o) um mehr als etwa 25 Prozent, niedriger liegt als das Maximum der Montagekraft F*_{Mmax} der nicht erfindungsgemäßen Ausführung. Typische Werte, die erfindungsgemäß als Absenkung der maximalen Montagekraft F_{Mmax} bezogen auf vergleichbare, nicht erfindungsgemäße Ausführungen erreicht werden, liegen im Bereich von 35 Prozent bis 40 Prozent bei Steck-Verbindungssystemen SV ohne Umfangsdichtungen 8 bzw. andere dem Stecken zusätzlich entgegen wirkende Kräfte und im Bereich von 10 Prozent bis 25 Prozent bei Steck-Verbindungssystemen SV mit zusätzlich beim Einstecken entgegenwirkenden Kräften, wie sie beispielsweise durch das Vorhandensein von Umfangsdichtungen 8 und/oder federbelastete Auslaufstopps hervorgerufen werden.

Für die Hauptmontagephase PZo, PZₓ kann insbesondere vorgesehen sein, dass die Kontur K der Spreizfläche AS derart auf die Gegen-Kontur GK abgestimmt ist, dass sich in der Hauptmontagephase PZₒ, PZₓ zwischen dem Beginn und dem Ende des Einsteckens mit einer Änderung des Montageweges s_{M} eine überproportionale, proportionale und/oder insbesondere unterproportionale Änderung des Spreizweges s_{W} einstellt.

Eine unterproportiönale Änderung, durch die beispielsweise ein zu erwartender Steckkraftanstieg aufgrund des Eintritts der Umfangsdichtung 8 in die Aufnahmeöffnung 3 des ersten Kuppungsteils 1 kompensiert werden kann, ist dabei durch eine konkave Kontur K zu erzielen, wie sie exemplarisch in Fig. 10 dargestellt ist. Es kann also erfindungsgemäß auch vorgesehen sein, dass die Kontur K der Spreizfläche AS oder die Gegen-Kontur GK, zumindest abschnittsweise, eine im Querschnitt konkave Begrenzung ihrer Mantelfäche aufweist, wie eine Ausbildung in Form eines Segments eines Rotationshyperboloids.

Einem zu erwartenden Steckkraftanstieg aufgrund des Eintritts der Umfangsdichtung 8 in die Aufnahmeöffnung 3 des ersten Kuppungsteils 1 kann auch zusätzlich durch ein Gleitmittel, z. B. durch eine Schmierung der Umfangsdichtung 8 mit einem geeigneten Schmierfett, entgegengewirkt werden. Dadurch kann mit Vorteil eine weitere Absenkung des Peaks·F_{Mmax} der Steckkraft F_{M} erfolgen, wobei diese Absenkung der Steckkraft F_{M} sich mit derjenigen überlagert, die durch die erfindungsgemäße Kurvengeometrie hervorgerufen wird.

Durch die geometrische Flächengestaltung an Halteelement 4 und Gegen-Halteelement 5 kann erfindungsgemäß auch bevorzugt vorgesehen sein, dass die Kontur K der Spreizfläche AS derart auf die Gegen-Kontur GK abgestimmt ist, dass die Kontur K der Spreizfläche AS und die Gegen-Kontur GK, insbesondere zumindest in einer der Montagephasen PAₒ, PAx, PZₒ, PZₓ, PEₒ, PEₓ, vorzugsweise zumindest in der Hauptmontagephase PZₒ, PZₓ, in linienförmigem Kontakt aneinander anliegen. Es kommt zwar dadurch zu einer hohen mechanischen Spannungskonzentration, jedoch kann durch diese Minimierung der Reibungsfläche die Reibungszahl und damit die aufzuwendende Montagekraft F_{M} gesenkt werden.

Die jeweilige Fläche F (das Integral F_{M} (s_{M}) ds_{M}) unter den Kurven der Abhängigkeiten F_{M} (s_{M}) in Fig. 5 bezeichnet die beim Stecken aufzuwendende Montagearbeit. Diese Arbeit ist für alle Ausführungen etwa gleich groß. Es ist jedoch zu sehen, dass die Montagearbeit bei den erfindungsgemäßen Ausführungen gleichmäßiger über den gesamten Vorgang des Einsteckens verteilt ist, wodurch der Spitzenwert F_{Mmax} der Steckkraft F_{M} gesenkt werden kann. Die Fläche F unter den Kurven der erfindungsgemäßen Abhängigkeiten F_{M} (s_{M}), insbesondere aber die Fläche im Bereich der Hauptmontagephase PZₒ, PZₓ kann hinsichtlich ihrer Gestalt dabei in erster Näherung idealerweise durch ein Rechteck beschrieben werden, wobei die vorstehend erwähnten prozentualen Maximalkraftschwankungen um den. Mittelwert der Steckkraft F_{M} in der Hauptmontagephase PZₒ, PZₓ als Abweichungen von der Rechteckform zu beachten sind.

Auf die erfindungsgemäß unterschiedlichen möglichen Ausführungen und Kombinationen von Spreizfläche AS und Gegen-Spreizfläche AGS (Fig. 7 bis 10) in Gegenüberstellung zu einem nicht erfindungsgemäßen Steck-Verbindungssystem (Fig. 6) wurde bereits vorstehend Bezug genommen. Hierzu ist zu ergänzen, dass in Fig. 6 der Montageweg s_{M} gleichzeitig in seiner in der Darstellung konkret vorliegenden Größe und einmal in seiner Laufrichtung dargestellt ist. Der Montageweg s_{M} beginnt jeweils mit dem Beginn des Spreizens des Halteelementes 4 bei Anlage der Kontur K an der Gegenkontur GK und endet, wenn die Rastkante 15* bzw. 15 das Gegen-Halteelement 5* bzw. 5 hinterfasst.

Eine zwischen Beginn und Ende liegende Montagephase ist für die Erfindung exemplarisch in Fig. 3a dargestellt.

Zu erwähnen ist im Hinblick auf die Montage auch, dass in der nicht erfindungsgemäßen Ausführung nach Fig. 6 die Kontur K* aus zwei Abschnitten A1* und A2* zusammengesetzt ist, von denen der erste, der dem Gegen-Halteelement 5 zugewandte Abschnitt A1*, eine konisch ausgebildete Mantelfläche und der zweite, der dem Gegen-Halteelement 5 abgewandte Abschnitt A2*, eine zylindrisch ausgebildete Mantelfläche hat. Der dem Gegen-Halteelement 5 abgewandte Abschnitt A2* trägt durch die zylindrisch ausgebildete Mantelfläche dabei nicht zu einer Aufweitung bei.

Die erfindungsgemäßen Ausführungen der Spreizflächen AS in Fig. 1, 2, 3a, 3b, 7, 8 und 9 weisen eine konvexe Kontur K auf. Bei den Ausführungen in Fig. 7 und 9 verläuft diese über die gesamte Länge L des Halteelementes 4, während bei der Ausführung gemäß Fig. 8 zwei Abschnitte A1, A2 - ein konischer Spitzenabschnitt A1 und ein konvex gekrümmter Endabschnitt A2 - vorgesehen sind. Die Ausführungen in Fig. 7 und 9 unterscheiden sich dadurch voneinander, dass die Ausführung in Fig. 7 eine Mantelfläche in Form einer Kugelkalotte aufweist, was durch den in die Zeichnung eingetragenen Radius R veranschaulicht wird, und dass die Ausführung in Fig. 9 eine Mantelfläche in Form eines Rotationsparabolöids aufweist, was durch drei in die Zeichnung eingetragene Radien R1, R2, R3 veranschaulicht wird.

In Fig. 10 ist - wie bereits erwähnt - eine Ausführung mit konkaver Kontur K der Spreizfläche AS, also eine Mantelfläche nach der Art eines Rotationshyperboloids dargestellt.

Die Erfindung ist nicht auf die dargestellten Ausführungsbeispiele beschränkt, sondern umfasst auch alle im Sinne der Erfindung gleichwirkenden Ausführungen. So kann die Konturengestaltung von Halteelement 4 und Gegen-Halteelement 5 in kinematischer Umkehr zu den dargestellten Ausführungsbeispielen erfolgen, ohne dass der Rahmen der Erfindung verlassen wird. Auch die Ausführung gemäß Fig. 6 kann somit bei entsprechender Gestaltung der Gegen-Spreizfläche AGS, beispielsweise mit einer zumindest abschnittsweise konvexen oder konkaven Gegen-Kontur GK, zu einer erfindungsgemäßen Ausführung werden. Das erste Kupplungsteil 1 sollte dann nicht - wie erfindungsgemäß bevorzugt - aus Metall, wie z. B. Messing, sondern aus einem technischen Kunststoff, wie beispielsweise glasfaserverstärktem Polyamid, hergestellt sein.

Auch kann, wie bereits durch die Ausführung in Fig. 8 nahegelegt ist, die Kontur K der Spreizfläche AS und/oder die Gegen-Kontur GK, aus mehreren Abschnitten - auch mehr als zwei Abschnitten A1, A2 - bestehen, die jeweils unterschiedlich ausgebildet sind. Hierbei können Abschnitte alternieren, die eine überproportionale, proportionale oder unterproportionale Änderung des Spreizweges s_{W} beim Einstecken bewirken, wobei im Rahmen der Erfindung auch zylindrisch ausgebildete Mantelflächen nicht ausgeschlossen sind. Dies führt zu der sogenannten Spline-Charakteristik, wie sie unter Bezugnahme auf Fig. 4 beschrieben wurde.

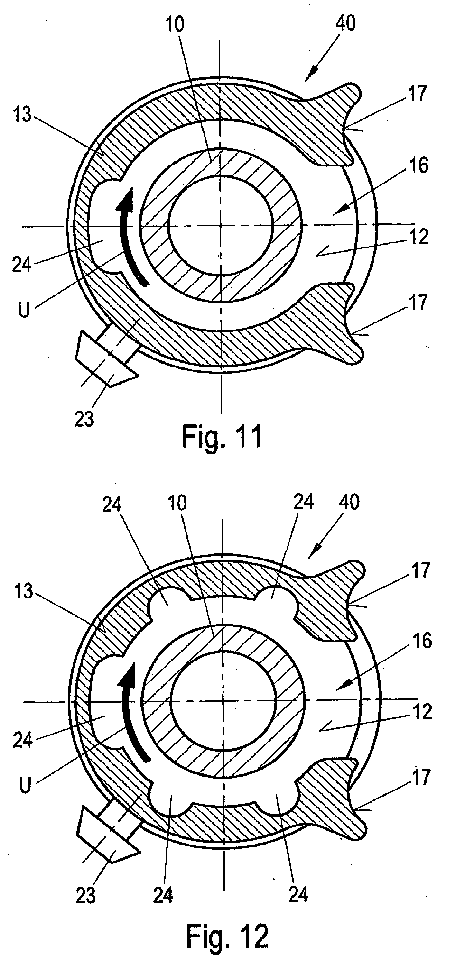

Des Weiteren kann z. B. - wie sich aus Fig. 11 und 12 ergibt, die Einzeldarstellungen zweier Ausführungen eines Halteteiles 40 zeigen - die Ringklammer zur Beeinflussung ihrer Radialelastizität im Bereich des Halteabschnittes 13 und/oder in umfangsgemäß zwischen den Rastelementen 4 liegenden Bereichen eine Ausnehmung 24 oder auch mehrere Ausnehmungen 24 aufweisen. Durch diese Ausnehmungen 24 wird vorteilhafterweise auch der Betrag des Flächeninhalts der Kontaktfläche zwischen der Spreizfläche AS des Halteelementes 4 und der GegenSpreizfläche AGS des Gegen-Halteelements 5 und damit die aufzuwendende Montagekraft F_{M} verringert.

Schließlich ist es möglich, dass bei einem ringförmig ausgebildetem Halteelement 4 und/oder Gegen-Halteelement 5, wie sie exemplarisch dargestellt wurden, in umfangsgemäßer Richtung (Pfeile U in Fig. 11 und 12) eine Änderung der Form der Kontur K und/oder der Gegen-Kontur GK vorgesehen sein kann. So könnte beispielsweise eine konvexe Kontur K in umfangsgemäßer Richtung U ihre Krümmung ändern und/oder in eine konische Kontur K übergehen und umgekehrt.

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: erstes Kupplungsteil von SV, Muffenteil
- 2: zweites Kupplungsteil von SV, Steckerteil
- 3: Aufnahmeöffnung von 1
- 4: Halteelement an 40, mit AS
- 5: Gegen-Halteelement, mit AGS, Haltesteg an 1
- 6: Steckerschaft von 2
- 7: Umfangsnut in 6
- 8: Umfangsdichtungen auf 6
- 9: Fluidleitung
- 10: Dorn von 2
- 11: Wandung von 9
- 12: Haltesteg an 6
- 13: Halteabschnitt von 40 für 5, 12
- 14: Verliersicherung für 40
- 15: Haltekante von 4
- 16: Schlitzunterbrechung in 40
- 17: Klammerende von 40
- 18: Durchführungsöffnung von 40
- 19: Ringnut von 1 für 20
- 20: Ringbund von 40
- 21: Fixierringsteg auf 6
- 22: Haltenut für 14 auf 6
- 23: Dorn an 40 für 14
- 24: Ausnehmung in 40

- 40: Haltetell für 1, 2 (mit 40)
- A1: erster Abschnitt von K (Fig. 8)
- A2: zweiter Abschnitt von K (Fig. 8)
- AS: Spreizfläche von 4
- AGS.: Gegen-Spreizfläche von 5
- E: (Vor)mbntagerichtung von 40 auf 1
- F: Fläche, Montagearbeit (Fig. 4)
- F_{M}: Montagekraft, Steckkraft für 2, allgemein
- F_{Mmax}: maximale Montagekraft, Steckkraft, allgemein
- F*_{Mmax}: maximale Montagekraft, nicht erfindungsgemäß (Fig. 5)
- F_{Mmaxx}: maximale Montagekraft von SV nach Kurve x-x-x (Fig. 5)
- F_{Mmaxo}: maximale Montagekraft von SV nach Kurve o-o-o (Fig. 5)
- F_{Mx}: Mittelwert von F_{M} für Ausführung von SV nach Kurve x-x-x (Fig. 5)
- F_{Mo}: Mittelwert von F_{M} für Ausführung von SV nach Kurve o-o-o (Fig. 5)
- GK: Gegen-Kontur (von AGS)
- K: Kontur (von AS)
- L: Länge von 4
- PAₒ, PAₓ: Anfangsmontagephase (Fig. 5)
- PEₒ, PAₓ: Endmontagephase (Fig. 5)
- PZₒ, PZₓ: Hauptmontagephase (Fig. 5)
- R: Radius (Fig. 7, 8)
- R1, R2, R3: Radien (Fig. 9)
- S: Steckrichtung von 2 in 1
- SV: Steck-Verbindungssystem
- s_{M}: Montageweg von 2, allgemein
- s_{M1}: erster Montageweg von 2 (Fig. 4, 5)
- s_{M2}: zweiter Montageweg von 2 (Fig. 4, 5)
- s_{W}: Spreizweg von 4, allgemein
- s_{W1}: erster Spreizweg von 2 (Fig. 4, 5)
- s_{W2}: zweiter Spreizweg von 2 (Fig. 4, 5)
- T: Tangente an K (Fig. 9)
- U: Umfangsrichtung
- X-X: Längsachse von 4

- Δs_{M}: Änderung von s_{M}
- Δs_{W}: Änderung von s_{w}
- µ: Winkel K bzw. T und X-X in A1

## Patentansprüche

1. Steck-Verbindungssystem (SV), insbesondere für fluidische Leitungen, Armaturen oder Aggregate, umfassend ein erstes Kupplungsteil (1), wie ein Gehäuseteil, und ein entlang einer Achse (X-X) in eine Aufnahmeöffnung (3) des ersten Kupplungsteils (1) einsteckbares zweites Kupplungsteil (2), wie ein Steckerteil, wobei an einem der beiden Kupplungsteile (1, 2) ein Halteelement (4) zur Verrastung mit einem Gegen-Halteelement (5) des anderen Kupplungsteils (2, 1) angeordnet ist, wobei das Halteelement (4) eine Spreizfläche (AS) aufweist, die, indem sie relativ zu einer Gegen-Spreizfläche (AGS) des Gegen-Halteelements (5) gleitet, unter der Wirkung einer Montagekraft (F_{M}) beim Einstecken um einen Montageweg (s_{M}) eine Spreizbewegung des Halteelementes (4) quer zur Achse (X-X) um einen Spreizweg (s_{w}) bewirkt, wobei eine der Gegen-Spreizfläche (AGS) zugewandte Kontur (K) der Spreizfläche (AS) derart auf eine der Spreizfläche (AS) zugewandte Gegen-Kontur (GK) der Gegen-Spreizfläche (AGS) abgestimmt ist, dass sich der Spreizweg (S_{w}) beim Einstecken in Abhängigkeit vom Montageweg (s_{M}) nichtlinear ändert oder umgekehrt die Gegen-Kontur (GK) entsprechend auf die Kontur (K) abgestimmt ist,
**dadurch gekennzeichnet, dass** der beim Einstecken in einer Hauptmontagephase (PZₒ, PZₓ) zurückgelegte Montageweg (s_{M}) des zweiten Kupplungsteils (2) mehrfach größer ist als der in einer Anfangsmontagephase (PAₒ, PAₓ) zurückgelegte Montageweg (s_{M}) und/oder der in einer Endmontagephase (PEₒ, PEₓ) zurückgelegte Montageweg (s_{M}) des zweiten Kupplungsteils (2) wobei in der Anfangsmontagephase (PAₒ, PAₓ) ein Anstieg der Montagekraft (F_{M}), insbesondere bis zu einem Maximum (F_{Mmaxo}, F_{Mmaxx}), erfolgt, in der Hauptmontagephase (PZₒ, PZₓ) das Maximum (F_{Mmaxo}, F_{Mmaxx}) der Montagekraft (F_{M}) vorliegt und in der Endmontagephase (PEₒ, PEₓ) die Montagekraft (F_{M}) absinkt.

2. Steck-Verbindungssystem (SV) nach Anspruch 1,
**dadurch gekennzeichnet, dass** die Kontur (K) der Spreizfläche (AS) derart auf die Gegen-Kontur (GK) abgestimmt ist, dass in einer Anfangsmontagephase (PAₒ, PAₓ) zu Beginn des Einsteckens mit einer Änderung des Montageweges (s_{M}) eine überproportionale Änderung des Spreizweges (sw) erfolgt.

3. Steck-Verbindungssystem (SV) nach Anspruch 1 oder 2,
**dadurch gekennzeichnet, dass** die Kontur (K) der Spreizfläche (AS) derart auf die Gegen-Kontur (GK) abgestimmt ist, dass in einer Endmontagephase (PEₒ, PEₓ) des Einsteckens mit einer Änderung (Δs_{M}) des Montageweges (s_{M}) eine proportionale oder unterproportionale Änderung (Δs_{w}) des Spreizweges (s_{w}) erfolgt.

4. Steck-Verbindungssystem (SV) nach einem der Ansprüche 1 bis 3,
**dadurch gekennzeichnet, dass** die Kontur (K) der Spreizfläche (AS) derart auf die Gegen-Kontur (GK) abgestimmt ist, dass in einer Hauptmontagephase (PZₒ, PZₓ) zwischen dem Beginn und dem Ende des Einsteckens mit einer Änderung des Montageweges (s_{M}) eine überproportionale, proportionale und/oder insbesondere unterproportionale Änderung (Δs_{w}) des Spreizweges (s_{w}) erfolgt.

5. Steck-Verbindungssystem (SV) nach einem der Ansprüche 1 bis 4,
**dadurch gekennzeichnet, dass** die Kontur (K) der Spreizfläche (AS) derart auf die Gegen-Kontur (GK) abgestimmt ist, dass die Montagekraft (F_{M}) in der Hauptmontägephase (PZₒ, PZₓ) um nicht mehr als 20 Prozent, vorzugsweise um nicht mehr als 15 Prozent, besonders bevorzugt um nicht mehr als 10 Prozent, von einem mittleren Wert der Montagekraft (FM) in der Hauptmontagephase (PZₒ, PZₓ) abweicht.

6. Steck-Verbindungssystem (SV) nach einem der Ansprüche 1 bis 5,
**dadurch gekennzeichnet, dass** die Kontur (K) der Spreizfläche (AS) und/oder die Gegen-Kontur (GK), zumindest abschnittsweise, eine zylindrische oder konusförmige Ausbildung mit im Querschnitt geradliniger Begrenzung ihrer Mantelfäche aufweist.

7. Steck-Verbindungssystem (SV) nach einem der Ansprüche 1 bis 6,
**dadurch gekennzeichnet, dass** die Kontur (K) der Spreizfläche (AS) und/oder die Gegen-Kontur (GK), zumindest abschnittsweise, eine Ausbildung in Form einer Kalotte, insbesondere der einer Kugel, eines Ellipsoids oder eines Rotationsparaboloids, mit im Querschnitt konvexer Begrenzung ihrer Mantelfäche aufweist.

8. Steck-Verbindungssystem (SV) nach einem der Ansprüche 1 bis 7,
**dadurch gekennzeichnet, dass** die Kontur (K) der Spreizfläche (AS) oder die Gegen-Kontur (GK), zumindest abschnittsweise, eine im Querschnitt konkave Begrenzung ihrer Mantelfäche aufweist, wie eine Ausbildung in Form eines Segments eines Rotationshyperboloids.

9. Steck-Verbindungssystem (SV) nach einem der Ansprüche 1 bis 8,
**dadurch gekennzeichnet, dass** die Kontur (K) der Spreizfläche (AS) und/oder die Gegen-Kontur (GK), aus mehreren Abschnitten besteht, die jeweils unterschiedlich, insbesondere nach Anspruch 6, 7 oder 8, ausgebildet sind.

10. Steck-Verbindungssystem (SV) nach einem der Ansprüche 1 bis 9,
**dadurch gekennzeichnet, dass** die Kontur (K) der Spreizfläche (AS) derart auf die Gegen-Kontur (GK) abgestimmt ist, dass die Kontur (K) der Spreizfläche (AS) und die Gegen-Kontur (GK), insbesondere zumindest in einer der Montagephasen (PAₒ, PAₓ, PZₒ, PZₓ, PEₒ, PEₓ), vorzugsweise zumindest in der Hauptmontagephase (PZₒ, PZₓ) in linienförmigem Kontakt aneinander anliegen.

11. Steck-Verbindungssystem (SV) nach einem der Ansprüche 1 bis 10,
**dadurch gekennzeichnet, dass** das zweite Kupplungsteil (2) ein Steckerteil ist, das entlang der Achse (X-X) mit einem Schaft (6) dichtend in die Aufnähmeöffnung (3) des ersten Kupplungsteils (1) einsteckbar ist, wobei zum Dichten umfangsgemäß in einem der beiden Kupplungsteile (1, 2) mindestens eine Nut (7) ausgebildet ist, in der eine, insbesondere aus einem Elastomer bestehende Umfangsdichtung (8) angeordnet ist.

12. Steck-Verbindungssystem (SV) nach Anspruch 11,
**dadurch gekennzeichnet, dass** die Umfangsdichtung (8) mit einem Gleitmittel versehen, z. B. mit einem Schmierfett geschmiert, ist.

13. Steck-Verbindungssystem (SV) nach einem der Ansprüche 1 bis 12,
**gekennzeichnet durch** eine Verriegelungseinrichtung, die einerseits aus zwei äußeren, radialen, flanschartigen und im eingesteckten Zustand axial, in Steckrichtung (S) benachbarten Haltestegen (12, 5) der beiden Kupplungsteile (1, 2) und andererseits aus mindestens einem Halteteil (40) besteht, an dem sich das Halteelement (4) befindet.

14. Steck-Verbindungssystem (SV) nach Anspruch 13,
**dadurch gekennzeichnet, dass** das Halteteil (40) im Montagezustand mit mindestens einem im Axialschnitt C-förmigen Halteabschnitt die Haltestege (12, 5) der beiden Kupplungsteile (1, 2) formschlüssig axial und radial umgreift, wobei das Halteteil (40) und das zweite Kupplungsteil (2) in aneinander angepasster Weise derart ausgebildet sind, dass das Halteteil (40) radial auf das zweite Kupplungsteil (2) aufgerastet werden kann, wobei das Halteteil (40) im Bereich jedes Halteabschnittes (13) radial elastisch beweglich ist.

15. Steck-Verbindungssystem (SV) nach einem der vorhergehenden Ansprüche,
**dadurch gekennzeichnet, dass** bei einem ringförmig ausgebildetem Halteteil (40) und/oder Gegen-Halteelement (5), in umfangsgemäßer Richtung (U) in zwischen mehreren Rastelementen (4), die in einem/dem Haltebereich (13) liegen, oder in zwischen Gegen-Rastelementen (5) liegenden Bereichen eine Ausnehmung (24) oder mehrere Ausnehmungen vorgesehen sind.

16. Steck-Verbindungssystem (SV) nach einem der vorhergehenden Ansprüche,
**dadurch gekennzeichnet, dass** bei einem ringförmig ausgebildetem Halteelement (4) und/oder Gegen-Halteelement (5), in umfangsgemäßer Richtung (U) eine Änderung der Form der Kontur (K) und/oder der Gegen-Kontur (GK) vorgesehen ist.

## Claims

1. Plug-in connection system (SV), in particular for fluidic lines, fittings or assemblies, comprising a first coupling part (1), such as a housing part, and a second coupling part (2), such as a plug part, which can be plugged into a receiving opening (3) of the first coupling part (1) along an axis (X-X), wherein a holding element (4) is arranged on one of the two coupling parts (1, 2) for latching with a mating holding element (5) of the other coupling part (2, 1), wherein the holding element (4) has a spreading surface (AS) which, by sliding relative to a mating spreading surface (AGS) of the mating holding element (5), causes a spreading movement of the holding element (4) transversally to the axis (X-X) by a spreading travel (s_{w}) under the effect of a mounting force (F_{M}) during plugging in by a mounting travel (s_{M}), wherein a contour (K) of the spreading surface (AS) that faces the mating spreading surface (AGS) is adapted to a mating contour (GK) of the mating spreading surface (AGS) that faces the spreading surface (AS) in such a way that the spreading travel (S_{w}) changes non-linearly during plugging in in dependence on the mounting travel (s_{M}), or conversely the mating contour (GK) is correspondingly adapted to the contour (K),
**characterized in that** the mounting travel (s_{M}) of the second coupling part (2) that is covered in a main mounting phase (PZₒ, PZₓ) during plugging in is multiply greater than the mounting travel (s_{M}) covered in an initial mounting phase (PAₒ, PAₓ), and/or the mounting travel (s_{M}) of the second coupling part (2) that is covered in a final mounting phase (PEₒ, PEₓ), wherein an increase in the mounting force (F_{M}), in particular up to a maximum (F_{Mmaxo}, F_{Mmaxx}), occurs in the initial mounting phase (PAₒ, PAₓ), the maximum (F_{Mmaxo}, F_{Maxx}) of the mounting force (F_{M}) is present in the main mounting phase (PZₒ, PZₓ), and the mounting force (F_{M}) lowers in the final mounting phase (PEₒ, PEₓ).

2. Plug-in connection system (SV) according to Claim 1,
**characterized in that**
the contour (K) of the spreading surface (AS) is adapted to the mating contour (GK) in such a way that an overproportional change of the spreading travel (s_{w}) occurs in an initial mounting phase (PAₒ, PAₓ) at the start of plugging in with a change of the mounting travel (s_{M}).

3. Plug-in connection system (SV) according to Claim 1 or 2,
**characterized in that**
the contour (K) of the spreading surface (AS) is adapted to the mating contour (GK) in such a way that a proportional or sub-proportional change (Δs_{w}) of the spreading travel (s_{w}) occurs in a final mounting phase (PEₒ, PEₓ) of plugging in with a change (Δs_{M}) of the mounting travel (s_{M}).

4. Plug-in connection system (SV) according to one of Claims 1 to 3,
**characterized in that**
the contour (K) of the spreading surface (AS) is adapted to the mating contour (GK) in such a way that an overproportional, proportional and/or in particular sub-proportional change (Δs_{w}) of the spreading travel (s_{w}) occurs in a main mounting phase (PZₒ, PZₓ) between the beginning and the end of plugging in with a change of the mounting travel (s_{M}).

5. Plug-in connection system (SV) according to one of Claims 1 to 4,
**characterized in that**
the contour (K) of the spreading surface (AS) is adapted to the mating contour (GK) in such a way that the mounting force (F_{M}) in the main mounting phase (PZₒ, PZₓ) deviates by not more than 20 per cent, preferably by not more than 15 per cent, particularly preferably by not more than 10 per cent, from an average value of the mounting force (F_{M}) in the main mounting phase (PZₒ, PZₓ).

6. Plug-in connection system (SV) according to one of Claims 1 to 5,
**characterized in that**
the contour (K) of the spreading surface (AS) and/or the mating contour (GK) has/have, at least in certain portions, a cylindrical or conical configuration with a cross-sectionally rectilinear delimitation of its/their lateral surface.

7. Plug-in connection system (SV) according to one of Claims 1 to 6,
**characterized in that**
the contour (K) of the spreading surface (AS) and/or the mating contour (GK) has/have, at least in certain portions, a configuration in the form of a spherical cap, in particular that of a sphere, an ellipsoid or a rotational paraboloid, with a cross-sectionally convex delimitation of its/their lateral surface.

8. Plug-in connection system (SV) according to one of Claims 1 to 7,
**characterized in that**
the contour (K) of the spreading surface (AS) or the mating contour (GK) has, at least in certain portions, a cross-sectionally concave delimitation of its lateral surface, such as a configuration in the form of a segment of a rotational hyperboloid.

9. Plug-in connection system (SV) according to one of Claims 1 to 8,
**characterized in that**
the contour (K) of the spreading surface (AS) and/or the mating contour (GK) is composed of a plurality of portions which are in each case configured differently, in particular according to Claim 6, 7 or 8.

10. Plug-in connection system (SV) according to one of Claims 1 to 9,
**characterized in that**
the contour (K) of the spreading surface (AS) is adapted to the mating contour (GK) in such a way that the contour (K) of the spreading surface (AS) and the mating contour (GK) bear in linear contact against one another, in particular at least in one of the mounting phases (PAₒ, PAₓ, PZₒ, PZₓ, PEₒ, PEₓ), preferably at least in the main mounting phase (PZₒ, PZₓ).

11. Plug-in connection system (SV) according to one of Claims 1 to 10,
**characterized in that**
the second coupling part (2) is a plug part which can be plugged in a sealing manner by way of a shaft (6) into the receiving opening (3) of the first coupling part (1) along the axis (X-X), wherein, for sealing purposes, at least one groove (7) is formed circumferentially in one of the two coupling parts (1, 2), in which groove there is arranged a circumferential seal (8) consisting in particular of an elastomer.

12. Plug-in connection system (SV) according to Claim 11,
**characterized in that**
the circumferential seal (8) is provided with a lubricant, for example being smeared with a lubricating grease.

13. Plug-in connection system (SV) according to one of Claims 1 to 12,
**characterized by**
a locking device which, on the one hand, is composed of two outer, radial, flange-like holding webs (12, 5) of the two coupling parts (1, 2) that, in the plugged-in state, are axially adjacent in the plugging direction (S), and, on the other hand, of at least one holding part (40) on which the holding element (4) is situated.

14. Plug-in connection system (SV) according to Claim 13,
**characterized in that,**
in the mounted state, the holding part (40) engages axially and radially around the holding webs (12, 5) of the two coupling parts (1, 2) in a form-fitting manner by way of at least one holding portion which is C-shaped in axial section, wherein the holding part (40) and the second coupling part (2) are configured in a mutually tailored manner in such a way that the holding part (40) can be latched radially onto the second coupling part (2), wherein the holding part (40) is radially elastically moveable in the region of each holding portion (13).

15. Plug-in connection system (SV) according to one of the preceding claims,
**characterized in that,**
with an annularly configured holding part (40) and/or mating holding element (5), a recess (24) or a plurality of recesses is/are provided in the circumferential direction (U) between a plurality of latching elements (4) which are situated in a/the holding region (13), or in regions situated between mating latching elements (5).

16. Plug-in connection system (SV) according to one of the preceding claims,
**characterized in that,**
with an annularly configured holding element (4) and/or mating holding element (5), a change in the shape of the contour (K) and/or the mating contour (GK) is provided in the circumferential direction (U).

## Revendications

1. Système d'assemblage par enfichage (SV), en particulier pour des conduites, des éléments de robinetterie ou des groupes fluidiques, comprenant une première partie de couplage (1) comme une partie de corps, et une deuxième partie de couplage (2) enfichable le long d'un axe (X-X) dans une ouverture de réception (3) de la première partie de couplage (1), comme une partie de connecteur, dans lequel un élément de retenue (4) est disposé sur une des deux parties de couplage (1, 2) pour l'encliquetage avec un contre-élément de retenue (5) de l'autre partie de couplage (2, 1), dans lequel l'élément de retenue (4) présente une face expansible (AS) qui, du fait qu'elle glisse par rapport à une face expansible opposée (AGS) du contre-élément de retenue (5), provoque sous l'action d'une force de montage (F_{M}) lors de l'enfichage sur une course de montage (s_{M}), un mouvement d'expansion de l'élément de retenue (4) transversalement à l'axe (X-X) sur une course d'expansion (s_{w}), dans lequel un contour (K) de la face expansible (AS) tourné vers la face expansible opposée (AGS) est adapté à un contre-contour (GK) de la face expansible opposée (AGS) tourné vers la face expansible (AS), de telle manière que la course d'expansion (S_{w}) varie de façon non linéaire lors de l'enfichage en fonction de la course de montage (s_{M}) ou inversement que le contre-contour (GK) est adapté de façon correspondante au contour (K), **caractérisé en ce que** la course de montage (s_{M}) de la deuxième partie de couplage (2) parcourue lors de l'enfichage dans une phase de montage principale (PZₒ, PZₓ) est plusieurs fois plus grande que la course de montage (s_{M}) parcourue dans une phase de montage initiale (PAₒ, PAₓ) et/ou que la course de montage (s_{M}) de la deuxième partie de couplage (2) parcourue dans une phase de montage finale (PEₒ, PEₓ), dans lequel il se produit une augmentation de la force de montage (F_{M}), en particulier jusqu'à un maximum (F_{Mmaxo}, F_{Mmaxx}) dans la phase de montage initiale (PAₒ, PAₓ), le maximum (F_{Mmaxo}, F_{Mmaxx}) de la force de montage (F_{M}) est présent dans la phase de montage principale (PZₒ, PZₓ), et la force de montage (F_{M}) diminue dans la phase de montage finale (PEₒ, PEₓ).

2. Système d'assemblage par enfichage (SV) selon la revendication 1, **caractérisé en ce que** le contour (K) de la face expansible (AS) est adapté au contre-contour (GK), de telle manière qu'il se produise, dans une phase de montage initiale (PAₒ, PAₓ) au début de l'enfichage, une variation de la course d'expansion (s_{w}) sur-proportionnelle à une variation de la course de montage (s_{M}).

3. Système d'assemblage par enfichage (SV) selon la revendication 1 ou 2, **caractérisé en ce que** le contour (K) de la face expansible (AS) est adapté au contre-contour (GK) de telle manière qu'il se produise, dans une phase de montage finale (PEₒ, PEₓ) de l'enfichage, une variation (Δs_{w}) de la course d'expansion (s_{w}) proportionnelle ou sous-proportionnelle à une variation (Δs_{M}) de la course de montage (s_{M}).

4. Système d'assemblage par enfichage (SV) selon l'une quelconque des revendications 1 à 3, **caractérisé en ce que** le contour (K) de la face expansible (AS) est adapté au contre-contour (GK) de telle manière qu'il se produise, dans une phase de montage principale (PZₒ, PZₓ) entre le début et la fin de l'enfichage, une variation (Δs_{w}) de la course d'expansion (s_{w}) sur-proportionnelle, proportionnelle et/ou particulièrement sous-proportionnelle à une variation de la course de montage (s_{M}).

5. Système d'assemblage par enfichage (SV) selon l'une quelconque des revendications 1 à 4, **caractérisé en ce que** le contour (K) de la face expansible (AS) est adapté au contre-contour (GK) de telle manière que la force de montage (F_{M}) dans la phase de montage principale (PZₒ, PZₓ) ne s'écarte pas de plus de 20 %, de préférence pas de plus de 15 %, de préférence encore pas de plus de 10 % d'une valeur moyenne de la force de montage (F_{M}) dans la phase de montage principale (PZₒ, PZₓ).

6. Système d'assemblage par enfichage (SV) selon l'une quelconque des revendications 1 à 5, **caractérisé en ce que** le contour (K) de la face expansible (AS) et/ou le contre-contour (GK) présente, au moins localement, une configuration cylindrique ou conique avec une délimitation de sa surface latérale rectiligne en section transversale.

7. Système d'assemblage par enfichage (SV) selon l'une quelconque des revendications 1 à 6, **caractérisé en ce que** le contour (K) de la face expansible (AS) et/ou le contre-contour (GK) présente, au moins localement, une configuration en forme de calotte, en particulier celle d'une sphère, d'un ellipsoïde ou d'un paraboloïde de révolution, avec une délimitation de sa surface latérale convexe en section transversale.

8. Système d'assemblage par enfichage (SV) selon l'une quelconque des revendications 1 à 7, **caractérisé en ce que** le contour (K) de la face expansible (AS) ou le contre-contour (GK) présente, au moins localement, une délimitation de sa surface latérale concave en section transversale, par exemple une configuration ayant la forme d'un segment d'un hyperboloïde de révolution.

9. Système d'assemblage par enfichage (SV) selon l'une quelconque des revendications 1 à 8, **caractérisé en ce que** le contour (K) de la face expansible (AS) et/ou le contre-contour (GK) se compose de plusieurs parties, qui sont respectivement configurées de façon différente, en particulier selon la revendication 6, 7 ou 8.

10. Système d'assemblage par enfichage (SV) selon l'une quelconque des revendications 1 à 9, **caractérisé en ce que** le contour (K) de la face expansible (AS) est adapté au contre-contour (GK) de telle manière que le contour (K) de la face expansible (AS) et le contre-contour (GK) s'appliquent l'un sur l'autre en un contact linéaire, en particulier au moins dans une des phases de montage (PAₒ, PAₓ, PZₒ, PZₓ, PEₒ, PEₓ), de préférence au moins dans la phase de montage principale (PZₒ, PZₓ).

11. Système d'assemblage par enfichage (SV) selon l'une quelconque des revendications 1 à 10, **caractérisé en ce que** la deuxième partie de couplage (2) est une partie de connecteur, qui est enfichable le long de l'axe (X-X) avec un tronc (6) de façon étanche dans l'ouverture de réception (3) de la première partie de couplage (1), dans lequel, pour l'étanchéité en périphérie, au moins une rainure (7) est formée dans une des deux parties de couplage (1, 2), dans laquelle est disposé un joint périphérique (8) constitué notamment d'un élastomère.

12. Système d'assemblage par enfichage (SV) selon la revendication 11, **caractérisé en ce que** le joint périphérique (8) est muni d'un moyen de glissement, par exemple lubrifié avec une graisse lubrifiante.

13. Système d'assemblage par enfichage (SV) selon l'une quelconque des revendications 1 à 12, **caractérisé par** un dispositif de verrouillage, qui se compose d'une part de deux nervures de maintien (12, 5) extérieures, radiales, en forme de brides des deux parties de couplage (1, 2) et axialement proches dans la direction d'enfichage (S) dans l'état enfiché et d'autre part d'au moins une partie de maintien (40), sur laquelle l'élément de retenue (4) se trouve.

14. Système d'assemblage par enfichage (SV) selon la revendication 13, **caractérisé en ce que** la partie de maintien (40) entoure à l'état monté, avec au moins une partie de retenue en forme de C en section axiale, les nervures de maintien (12, 5) des deux parties de couplage (1, 2) par emboîtement axial et radial, dans lequel la partie de maintien (40) et la deuxième partie de couplage (2) sont configurées de façon adaptée l'une à l'autre, de telle manière que la partie de maintien (40) puisse être encliquetée radialement sur la deuxième partie de couplage (2), dans lequel la partie de maintien (40) est mobile radialement de façon élastique dans la région de chaque partie de retenue (13).

15. Système d'assemblage par enfichage (SV) selon l'une quelconque des revendications précédentes, **caractérisé en ce que**, dans le cas d'une partie de maintien (40) et/ou d'un contre-élément de retenue (5) de forme annulaire, il est prévu dans la direction périphérique (U), un évidement (24) ou plusieurs évidements dans des régions entre plusieurs éléments d'encliquetage (4), qui sont situés dans une/la région de retenue (13) ou dans des régions situées entre des éléments d'encliquetage opposés (5).

16. Système d'assemblage par enfichage (SV) selon l'une quelconque des revendications précédentes, **caractérisé en ce que**, dans le cas d'un élément de retenue (4) et/ou d'un contre-élément de retenue (5) de forme annulaire, il est prévu en direction périphérique (U) une variation de la forme du contour (K) et/ou du contre-contour (GK).
